Europäisches Patentamt

European Patent Office

Office européen des brevets

(19)

(11) Veröffentlichungsnummer: **0 110 159**
**B1**

(12) **EUROPÄISCHE PATENTSCHRIFT**

(45) Veröffentlichungstag der Patentschrift:
**02.04.86**

(21) Anmeldenummer: **83110815.4**

(22) Anmeldetag: **28.10.83**

(51) Int. Cl.⁴: **C 09 J 3/16,** C 08 L 75/04,
C 08 K 5/13

(54) **Kontaktklebstoffe.**

(30) Priorität: **02.11.82 DE 3240396**

(43) Veröffentlichungstag der Anmeldung:
**13.06.84 Patentblatt 84/24**

(45) Bekanntmachung des Hinweises auf die Patenterteilung:
**02.04.86 Patentblatt 86/14**

(84) Benannte Vertragsstaaten:
**DE**

(56) Entgegenhaltungen:
**FR - A - 2 376 184**
**US - A - 3 354 237**

(73) Patentinhaber: **HOECHST AKTIENGESELLSCHAFT,**
**Postfach 80 03 20, D-6230 Frankfurt am Main 80 (DE)**

(72) Erfinder: **Hesse, Wolfgang, Dr., Rossbachhöhe 42,**
**D-6204 Taunusstein (DE)**
Erfinder: **Sattelmeyer, Richard, Dr.,**
**Gabelsbornstrasse 32, D-6200 Wiesbaden (DE)**
Erfinder: **Schunck, Erich, Lessingstrasse 2,**
**D-6203 Hochheim am Main (DE)**

ACTORUM AG

## Beschreibung

Kontaktklebstoffe sind Klebstoffe auf Basis von meist synthetischen Kautschuken wie Polyurethankautschuk, Polychloroprenkautschuk oder Butadien-Acrylnitril-Kautschuk, die hauptsächlich in Form organischer Lösungen, gelegentlich auch als wässerige Dispersionen angewendet werden. Zur Verbesserung der Gebrauchseigenschaften werden diese Kautschuke mit künstlichen oder natürlichen Harzen versetzt. Bei Polychloroprenklebstoffen ist das die Regel und bei Polyurethanklebstoffen sowie Butadien-Acrylnitril-Klebstoffen in zunehmendem Masse der Fall.

Bei Polyurethankautschuken verwendet man zur Erhöhung der relativ niedrigen Wärmefestigkeit als Verstärker häufig Polyisocyanate, meist Triphenylmethantriisocyanat. Die verstärkende Wirkung von Isocyanaten bewirkt die gewünschte Erhöhung der Wärmefestigkeit. Das wird aber durch eine Reihe von Nachteilen erkauft. Isocyanate haben nur eine begrenzte Lagerfähigkeit und sind wasserempfindlich. Sie stellen an die Zusammensetzung der Lösemittel besondere Anforderungen. Diese dürfen keine aktiven Wasserstoffatome, insbesondere keine Hydroxylgruppen enthalten. Isocyanate sind hochtoxische Verbindungen, ausserdem neigen die für die Verstärkung von Polyurethankautschuken am besten geeigneten Polyisocyanate auf Basis von Triphenylmethan sowohl für sich als auch in Klebstoffen zu Verfärbungen.

In klebtechnischer Hinsicht bieten solche mit Isocyanaten verstärkten Klebstoffe Nachteile wegen der nur kurze Zeit dauernden Aktivierbarkeit des Klebfilms. Darunter ist folgendes zu verstehen: Kontaktklebstoffe verlieren nach Abdunsten der Lösemittel nach einiger Zeit, die zwischen einigen Minuten und mehreren Stunden liegen kann, ihre Klebrigkeit, d. h. sie binden ab. Die Klebrigkeit kann durch Wärmeaktivierung, beispielsweise durch kurzfristige Einwirkung von Infrarotstrahlung, wiederhergestellt werden. Diese Aktivierbarkeit kann bei manchen Klebstoffen praktisch unbegrenzt lange dauern, man bricht die Prüfungen aber gewöhnlich nach vier Wochen ab, was praxisgerecht ist. Bei mit Isocyanat verstärkten Polyurethanklebstoffen ist jedoch nur eine beschränkte Aktivierbarkeit möglich, und zwar in der Regel nur bis 24 h, höchstens jedoch 2 d. Das stellt natürlich einen Nachteil dar.

Die Aufgabe vorliegender Erfindung besteht in der Verbesserung der Gebrauchseigenschaften, insbesondere der Bindefestigkeit in der Wärme, von Kontaktklebstoffen auf Basis von Polyurethan-Kautschuken. Diese wird erfindungsgemäss dadurch erzielt, dass man den Kautschuk-Lösungen 2,5 bis 100, vorzugsweise 5 bis 60 Gew.-%, bezogen auf festen Kautschuk, eines Phenolats des Titans, Zirkons und/oder vorzugsweise des Aluminiums zugibt.

Der erfindungsgemässe Vorschlag bewirkt bei verstärkten Kontaktklebstoffen auf Basis von für diesen Zweck üblichen Polyurethan-Kautschuken, z. B. den Desmocoll-Typen (Firma Bayer AG) und den Elastostic-Typen (Firma BASF AG), dass die Klebrigkeit verbessert, die Aktivierbarkeit im Vergleich zu den bisher bekannten Polyurethan-Kautschuken wesentlich verlängert und eine Verfärbung weitgehend oder vollständig vermieden wird.

Ein ganz wesentlicher Vorteil der Erfindung besteht darin, dass die Metallphenolate, die zur Verstärkung des Klebstoffs herangezogen werden, im Gegensatz zu den bisher als Verstärkungsmittel verwendeten Isocyanaten nicht toxisch und gegen Wasser und Hydroxylgruppen enthaltende organische Lösemittel unempfindlich sind. Sie sind daher auch in Form wässeriger Dispersionen anwendbar.

Die Phenolate, die meistens harzartig sind, werden zweckmässig durch Umsetzung der entsprechenden Metallalkoholate mit Phenolen hergestellt, indem das Metallalkoholat mit dem Phenol unter vermindertem Druck behandelt wird, wobei die Alkoholkomponente entweicht. Als Phenol können Phenol selbst, Bisphenole wie Diphenylolmethane und/oder -propane, Resorcin, $\alpha$- und $\beta$-Naphthol, die isomeren Kresole oder ein-, zwei- oder dreifach durch Kohlenwasserstoffreste substituierte ein- oder mehrwertige Phenole, deren Kohlenwasserstoffreste 1 bis 20, vorzugsweise 1 bis 12 C-Atome und zusammen vorteilhaft höchstens 20 C-Atomen haben, verwendet werden, einschliesslich solchen Polyphenolen, wie sie bei der Kondensation von Phenolen mit Oxo-Verbindungen entstehen (Novolake). Die Kohlenwasserstoffreste können Alkyl-, Cycloalkyl, Aryl- oder Aralkylreste sein, also z. B. Methyl, Äthyl, Propyl, die verschiedenen Butyl-, Octyl- und Nonylreste, ferner Cyclohexyl- und Terpenreste, der unsubstituierte oder durch Alkyl wie Methyl, Isopropyl oder einen der Butylreste substituierte Phenylrest oder der durch Styrolisierung erhaltene Phenyläthylidenrest. Verbindungen mit Cycloalkylresten sind z. B. harzartige Terpenphenole. Aluminiumphenolate mehrwertiger Phenole sind bevorzugt.

Zur Verbesserung der Hydrolysebeständigkeit der Phenolate kann es zweckmässig sein, diese in üblicher Weise mit 1,3-Dioxoverbindungen, wie Acetylaceton, besonders mit Acetessigsäureestern von einwertigen Alkoholen zu stabilisieren, z. B. solchen mit 1 bis 20, vorzugsweise 1 bis 4 C-Atomen. Dabei kann die Dioxoverbindung in einer Menge bis zur koordinativen Sättigung zugegen sein, aber auch in einer noch grösseren, dann als Lösemittel wirkenden Menge.

Die erfindungsgemäss verstärkten Kontaktklebstoffe enthalten die üblichen Lösungsmittel wie Äthylacetat, Methyläthylketon, Toluol bzw. deren Gemische. Sie sind ebenso wie die nachträglich mit Isocyanaten verstärkten Klebstoffe Zweikomponenten-Klebstoffe. Die Mischung hat eine begrenzte Lebensdauer. Diese als Topfzeit bekannte Verarbeitungszeit kann bei den erfindungsgemässen Klebstoffen in üblicher Weise durch Zusatz von Verbindungen verlängert werden, die alkoholische oder phenolische Hydroxylgruppen enthalten. Geeignet sind beispielsweise hydroxylgruppenhaltige Polyesterharze und vorzugsweise Phenolharze des Novolak- oder Resoltyps in einer Menge bis zu 100, vorzugsweise 5 bis 60, insbesondere 10 bis 45 Gew.-% vom Kautschuk. Es ist auch möglich, eine Verlängerung durch Zugabe von Alkoholen, besonders von niedrigmolekularen einwertigen Alkoholen wie Methanol, Äthanol, Propanol oder den verschiedenen Butanolen zu erreichen, die z. B. in einer Menge bis 20, vorzugsweise 2 bis 10 Gew.-% vom Kautschuk verwendet werden können. Die Mitverwendung der hydroxylgruppenhaltigen Verbindungen, besonders von Phenolharzen, verbessert auch die Klebrigkeit der Klebfilme, ohne dass dadurch die Wärmefestigkeit leidet.

Die erfindungsgemässen Kontaktklebstoffe eignen sich zur Verklebung der verschiedensten Materialien wie Polyvinylchlorid, Leder, Gummi auf Basis von Natur- und Synthesekautschuk, Textilien natürlicher oder synthetischer Herkunft, Polyurethan oder Glas. Es können auch Stoffe mit Weichmachergehalt verklebt werden. Gegenstand der Erfindung ist daher auch die Verwendung der erfindungsgemässen Kontaktklebstoffe zur Verklebung von Materialien der verschiedensten Art.

In den folgenden Beispielen bedeuten d Tage, h Stunden, T Gewichtsteile und % Gewichtsprozent. In den Tabellen beziehen sich die Prozentangaben stets auf Feststoffe.

### Herstellung von Metallphenolaten

Phenolat A – In einem Reaktionsgefäss, welches mit Rührer, Thermometer und Einrichtung zur Vakuumdestillation versehen war, wurden 20,4 T einer Lösung von Aluminiumtriisobutylat in Isobutanol mit einem Gehalt von 80,1% Aluminiumtriisobutylat bzw. 9,9% Aluminium mit 14,3 T Acetessigester und 47,5 T 4,4'-Diphenylolpropan versetzt und im Vakuum der Wasserstrahlpumpe auf 150° C erhitzt. Dabei fielen 21,2 T Destillat an. Nach vierstündiger Reaktionszeit bei 150° C hob man das Vakuum auf, liess abkühlen und löste den Ansatz während des Abkühlens in 40,0 T Methyläthylketon. Nach Abkühlen auf Raumtemperatur erhielt man 100 T einer Lösung, die eine Viskosität von 130 mPa·s/20° C und einen Rückstand von 60,1% besass. Der Rückstand wurde bestimmt, indem eine Probe von 2 g 1 h bei 135° C im Trockenschrank erhitzt wurde.

Phenolat B – In der unter A beschriebenen Apparatur wurden 20,2 T der dort genannten Triisobutylat-Lösung mit 14,2 T Acetessigsäureäthylester versetzt, 45,8 T paraiso-Octylphenol zugegeben und wie unter A im Wasserstrahl-Vakuum 4 h bei 150° C reagiert. Dann wurde wie unter A in 40,0 T Methyläthylketon gelöst. Es fielen 100 T einer Lösung an, die bei einem Rückstand von 60% (1 h/135° C) eine Viskosität von 20 mPa·s/20° C aufwies.

Phenolat C – 41,3 T einer 65,4%igen Lösung von Aluminium-tri-n-butylat und 57,0 T paratert.-Butylphenol wurden in der unter A beschriebenen Apparatur auf die dort beschriebene Weise 6 h bei 170° C im Wasserstrahl-Vakuum miteinander umgesetzt und dann wie unter A in 40,0 T Cyclohexanon gelöst. Es fielen 100 T einer Lösung an, die bei einem Rückstand von 60% (1 h/135° C) eine Viskosität von 7 mPa·s/20° C aufwies.

Beispiele:
### Klebtechnische Prüfungen unter praxisüblichen Bedingungen

1. Je eine Probe von 100 T eines elastischen, weitgehend linearen Polyurethankautschuks (OH-Gehalt etwa 0,1%, Dichte 1,23 g/cm³, Lösungsviskosität 0,2 bis 0,8 Pa·s/20° C, 15% in Methyläthylketon; "Desmocoll 400 der Firma Bayer AG) wurde in einem Gemisch aus 215 T Methyläthylketon, 150 T Äthylacetat und 75 T Toluol gelöst und mit 10 T der Phenolate A, B und C für einen Vergleichsversuch mit 10 T Triphenylmethantriisocyanat (als 20%ige Lösung in Methylenchlorid) versetzt. Es wurden Verklebungen auf Weich-PVC hergestellt. Die Verklebungen wurden nach dem Ablüften und Trocknen des Klebefilmes nach 3 s Infrarot-Aktivierung durchgeführt. Nach 7tägiger Lagerung wurden folgende Schälfestigkeiten erhalten.

| Vernetzer | Schälfestigkeit (N·cm⁻¹) | |
|---|---|---|
| | 23° C | 50° C |
| Ohne Zusatz | 43 | 5 |
| Phenolat A | 69 | 43 |
| Phenolat B | 54 | 44 |
| Phenolat C | 49 | 39 |
| Triphenylmethan-triisocyanat | 50 | 37 |

2. Ein Klebstoff wurde wie im Beispiel 1 hergestellt, mit 10% Phenolat A bzw. 10% Triphenylmethantriisocyanat und alternativ mit einem modifizierten Novolak aus 4,4'-Diphenylolpropan, Nonylphenol und Formaldehyd, wie er in der DE-AS Nr. 2365834 als Harz B beschrieben ist (Schmelzpunkt 107° C), versetzt. Es wurden auf Weich-PVC Klebefilme hergestellt und nach unterschiedlich langer Lagerzeit des bestrichenen PVC nach Aktivierung durch Infrarotstrahlung, die 3 s dauerte, Verklebungen hergestellt. Wie die nachstehende Tabelle zeigt, haben die erfindungsgemässen Klebstoffe auch bei Aktivierung nach langer Lagerung praktisch unveränderte oder gar erhöhte Schälfestigkeiten, das heisst, sie haben eine lange Aktivierbarkeit.

| | Schälfestigkeit 23° C (N·cm⁻¹) | | | |
|---|---|---|---|---|
| | h | h | d | d |
| Zeit der Lagerung | 24 | 48 | 5 | 24 |

| | Schälfestigkeit 23° C (N·cm$^{-1}$) | | | |
|---|---|---|---|---|
| | h | h | d | d |
| 10% Phenolat A | 59 | 64 | 62 | 60 |
| 10% Phenolat A, 10% Novolak | 65 | 63 | 85 | 93 |
| 10% Triphenylmethantriisocyanat | 68 | 32 | 18 | 17 |
| 10% Triphenylmethantriisocyanat, 10% Novolak | 68 | 60 | 18 | 10 |

3. Die im Beispiel 1 genannte Polyurethankautschuk-Lösung wurde mit den in der nachstehenden Tabelle angegebenen Zusätzen versehen und wie im Beispiel 1 klebtechnisch geprüft, und zwar nach 28 d bzw. der optimalen Zeit. Der Novolak war mit dem im Beispiel 2 genannten identisch.

| Zusätze | Schälfestigkeit 50° C (N·cm$^{-1}$) | Aktivierbarkeit |
|---|---|---|
| 20% Phenolat A | 38 | 28 d |
| 20% Phenolat A + 45% Novolak | 40 | 28 d |
| 10% Triphenylmethantriisocyanat | 37 | 24 h |
| 10% Triphenylmethantriisocyanat + 45% Novolak | 39 | 24 h |
| Ohne Zusatz | 4 | 28 d |

4. Die im Beispiel 1 genannte Polyurethankautschuk-Lösung wurde mit den in der nachstehenden Tabelle angegebenen Zusätzen versehen und wie im Beispiel 1 klebtechnisch geprüft. Die Verklebungen wurden einmal nach 20minütiger Ablüftung bei 23° C und das andere Mal nach 6 h Ablüftung bei 23° C und anschliessender Infrarot-Aktivierung hergestellt.

| Zusätze | Ablüftung 20 min/23° C Schälfestigkeit (N·cm$^{-1}$) | | Ablüftung 6 h/23° C 3 s IR-Aktivierung Schälfestigkeit (N·cm$^{-1}$) | |
|---|---|---|---|---|
| | 23° C | 50° C | 23° C | 50° C |
| 10% Phenolat A | 35 | 52 | 69 | 43 |
| 10% Triphenylmethantriisocyanat | 0 | 0 | 50 | 37 |

## Patentansprüche

1. Kontaktklebstoff auf Basis von Polyurethan, dadurch gekennzeichnet, dass eine Polyurethan-Kautschuklösung mit 2,5 bis 100 Gew.-%, bezogen auf festen Kautschuk, eines Phenolats des Titans, Zirkons und/oder vorzugsweise des Aluminiums und ggf. hydroxylgruppenhaltigen Verbindungen kombiniert wird.

2. Kontaktklebstoff nach Anspruch 1, dadurch gekennzeichnet, dass das Metallphenolat in einer Menge von 5 bis 60 Gew.-% angewendet wird.

3. Kontaktklebstoff nach einem der Ansprüche 1 oder 2, dadurch gekennzeichnet, dass die hydroxylgruppenhaltige Verbindung in einer Menge bis zu 100, vorzugsweise von 5 bis 45 Gew.-%, bezogen auf festen Kautschuk, angewendet wird.

4. Kontaktklebstoff nach einem oder mehreren der Ansprüche 1 bis 3, dadurch gekennzeichnet, dass die hydroxylgruppenhaltige Verbindung ein Phenolharz ist.

5. Kontaktklebstoff nach einem oder mehreren der Ansprüche 1 bis 4, dadurch gekennzeichnet, dass ein Aluminiumphenolat eines mehrwertigen Phenols verwendet wird.

6. Kontaktklebstoff nach einem oder mehreren der Ansprüche 1 bis 5, dadurch gekennzeichnet, dass noch eine Dioxoverbindung mitverwendet wird.

7. Verwendung von Kontaktklebstoffen nach einem oder mehreren der Ansprüche 1 bis 6 zur Verklebung organischer und anorganischer Materialien wie Leder, Polyvinylchlorid, Gummi, Textilien, Polyurethan oder Glas.

## Claims

1. A contact adhesive based on polyurethane rubber, characterized in that a polyurethane rubber solution is combined with 2.5 to 100% by weight, based on the solid rubber, of a phenolate of titanium, zirconium and/or preferably aluminium and optionally hydroxy group containing compounds.

2. A contact adhesive according to Claim 1, characterized in that the metal phenolate is used in a quantity of from 5 to 60% by weight.

3. A contact adhesive according to one of Claims 1 or 2, characterized in that the hydroxyl group containing compound is used in a quantity of up to 100, preferably 5 to 45% by weight, based on the solid rubber.

4. A contact adhesive according to one or more of Claims 1 to 3, characterized in that the hydroxyl group containing compound is a phenolic resin.

5. A contact adhesive according to one or more of Claims 1 to 4, characterized in that an aluminium phenolate of a polyhydric phenol is used.

6. A contact adhesive according to one or more of Claims 1 to 5, characterized in that a dioxo compound is concomitantly used.

7. Use of contact adhesive according to one or more of Claims 1 to 6 for the bonding of organic and inorganic materials such as leather, polyvinyl chloride, rubber, textiles, polyurethane or glass.


**Revendications**

1. Adhésif de contact à base de polyuréthanne, caractérisé en ce qu'on combine une solution de caoutchouc de polyuréthanne avec 2,5 à 100% en poids, par rapport au caoutchouc solide, d'un phénolate de titane, de zirconium et/ou de préférence d'aluminium et, le cas échéant, de composés contenant des groupes hydroxyles.

2. Adhésif de contact selon la revendication 1, caractérisé en ce qu'on met en jeu le phénolate métallique en une quantité de 5 à 60% en poids.

3. Adhésif de contact selon l'une des revendications 1 ou 2, caractérisé en ce qu'on met en jeu le composé contenant des groupes hydroxyles en une quantité allant jusqu'à 100, et se situant de préférence entre 5 et 45% en poids par rapport au caoutchouc solide.

4. Adhésif de contact selon une ou plusieurs des revendications 1 à 3, caractérisé en ce que le composé contenant des groupes hydroxyles est une résine phénolique.

5. Adhésif de contact selon une ou plusieurs des revendications 1 à 4, caractérisé en ce qu'on met en jeu un phénolate d'aluminium d'un phénol polyvalent.

6. Adhésif de contact selon une ou plusieurs des revendications 1 à 5, caractérisé en ce qu'on met en jeu simultanément un composé dioxo.

7. Utilisation des adhésifs de contact selon une ou plusieurs des revendications 1 à 6 pour le collage de matières organiques ou inorganiques telles que le cuir, le chlorure de polyvinyle, le caoutchouc, des matières textiles, le polyuréthanne ou le verre.